# EUROPEAN PATENT APPLICATION

(11) **EP 4 657 186 A1**
(43) Date of publication of application: **03.12.2025**
(21) Application number: 24178287.9
(22) Date of filing: 27.05.2024
(51) Int. Cl.: G05B 19/418

(54) **SYSTEM AND METHOD FOR DYNAMICALLY CONTROLLING OPERATION OF ASSETS IN AN INDUSTRIAL ENVIRONMENT**

(71) Applicant: Siemens Aktiengesellschaft, 80333 München (DE)
(72) Inventor: NATH, Ayan, 700075 Kolkata, West Bengal (IN); KUMAR, Palani, 560076 Bangalore, Karnataka (IN)
(74) Representative: HKW Intellectual Property PartG mbB

(57) **Abstract**

A system (102) and method for dynamically controlling operation of an asset (108) in an industrial environment is disclosed herein. The method comprises estimating, by a processing unit, a first set of adjustable variable values using a data-driven model based on a real-time loading condition associated with the asset (108) during operation. Further, the first set of adjustable variable values are implemented for controlling an operation of the asset (108) in real-time. Upon implementation of the first set of adjustable variable values, at least one loading parameter associated with the asset (108) is measured. Upon identifying that the at least one loading parameter meets a criterion indicative of an off-design performance of the asset (108), a second set of adjustable variable values are estimated based on the at least one loading parameter measured, using a physics-based model of the asset (108). The second set of adjustable variable values are further implemented for controlling the operation of the asset (108) in real-time.

## Description

The present invention relates to managing assets and more particularly relates to a system and method for dynamically controlling operation of assets in an industrial environment.

Assets such as heaters, chillers, boilers, motors etc. are often subjected to dynamic loading conditions especially in industrial environments. For efficient operation of an asset, the operating point of the asset must be controlled in response changes in the loading condition. For example, controller of a chiller system associated with a datacenter server room is required to adapt to varied heat loads at different times of the day, or to varied environmental factors such as ambient temperature, humidity and so on. The controller of the chiller system must respond effectively to varied loading conditions (i.e., varied heat loads and/or the varied environmental factors) for optimum cooling of the datacenter server room with minimal energy consumption. Typically, x, the chiller system is tuned, during design phase, to operate in predetermined loading conditions. Therefore, during operation, the chiller system works efficiently only for the predetermined loading conditions. However, in practicality, multiple factors such as ageing of components, erosion/flow blockage in certain parts, variabilities in manufacturing and various other aspects affect the performance of the chiller system during operation, causing deviations from the predetermined loading conditions.

In general, determining the operating point for an asset in response to variation in loading condition resulting from varied factors forms a multi-variable dynamic optimization problem. Further, such a multi-variable dynamic optimization problem is typically not addressable using a single control action. Further, as described earlier, various factors such as aging of components or new loading conditions which were not foreseen during a design phase of the industrial asset necessitates an update to the control action over time.

In light of the above, there exists a need for a system and method for dynamically controlling operation of assets in an industrial environment.

Therefore, it is an object of the present invention to provide a system and a method for dynamically controlling operation of an asset in an industrial environment.

The object of the present invention is achieved by a method for dynamically controlling operation of an asset as disclosed herein.

The method includes estimating, by a processing unit, a first set of adjustable variable values using a data-driven model based on a real-time loading condition associated with the asset during operation, the data-driven model being trained based on synthesized dataset indicative of behavior of the asset for a plurality of loading conditions. In an embodiment, the synthesized dataset is generated by simulating behavior of the asset for the plurality of loading conditions, using a physics-based model. In a further embodiment, the physics-based model is based on a predefined relationship between a loading condition of the asset and a set of adjustable variable values that are optimal for the loading condition.

Advantageously, the use of data-driven models helps in minimizing computational resource utilization and computation delays, as compared to use of physics-based models. Further, data-driven models may act as reduced order models that require less number of inputs as compared to traditional physics-based models.

In an embodiment, training the data-driven model based on the synthesized dataset includes simulating behavior of the asset corresponding to a plurality of loading conditions for predetermined sets of adjustable variable values, using the physics-based model of the asset. Further, an optimal set of adjustable variable values corresponding to each of the loading conditions is determined based on the simulated behaviour of the asset. Further, a synthesized dataset is generated based on each of the loading conditions and the corresponding optimal set of adjustable variable values. Furthermore, a machine learning technique is used to train the data-driven model based on the synthesized data.

Advantageously, the data-driven model may be trained to mimic human actions by allowing generation of the synthesized dataset based on adjustable variable values assigned by an engineer while simulating behaviour of the asset in different loading conditions.

The method further includes implementing, by the processing unit, the first set of adjustable variable values for controlling an operation of the asset in real-time. In an embodiment, the step of implementing the first set of adjustable variable values for controlling the operation of the asset in real-time includes dynamically updating the one or more adjustable variables associated with the asset based on the first set of adjustable variable values. The method further includes measuring, by the processing unit, at least one loading parameter associated with the asset, upon implementation of the first set of adjustable variable values. In an embodiment, the at least one loading parameter is measured using a sensing unit. In an embodiment, the at least one loading parameter is measured using a sensorless technique.

The method further includes identifying, by the processing unit, whether the at least one loading parameter measured meets a criterion indicative of an off-design performance of the asset. The method further includes estimating, by the processing unit, a second set of adjustable variable values based on the at least one loading parameter measured, using a physics-based model of the asset, upon identifying that the at least one loading parameter meets the criterion. The method further includes implementing, by the processing unit, the second set of adjustable variable values for controlling the operation of the asset in real-time. In an embodiment, implementing the second set of adjustable variable values for controlling the operation of the asset includes dynamically updating the one or more adjustable variables associated with the asset based on the second set of adjustable variable values. In an embodiment, the method further includes updating the data-driven model based on the second set of adjustable variable values and loading parameters of the asset upon implementing the second set of adjustable variable values.

Advantageously, measuring of the loading parameter after implementation of the first set of adjustable variable values, helps in verifying whether the first set of adjustable variable values helps in controlling the operation of the asset in a desired way, and invoking the physics-based model if an off-design performance is observed.

The object of the present invention is also achieved by an industrial control system as disclosed herein. The industrial control system includes a processing unit, and a memory coupled to the processing unit. The memory comprises a control module stored in the form of machine-readable instructions executable by the one or more processor(s), wherein the control module is capable of performing the method steps described above. In an embodiment, the asset is a chiller system installed in a datacenter server room.

The object of the present invention is also achieved by an industrial environment including an industrial control system as described above, an industrial plant comprising one or more assets, and a one or more client devices communicatively coupled to the industrial control system via a network, wherein the industrial control system is configured to perform any of the method steps described above.

The object of the present invention is also achieved by a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
FIG 1 is a block diagram of an industrial environment in accordance with an embodiment of the present invention;
FIG 2 is a block diagram of an industrial control system in accordance with an embodiment of the present invention;
FIG 3 shows a flowchart of a method for training a data-driven model using synthesized data, in accordance with an embodiment of the present invention; and
FIG 4 shows a flowchart of a method for controlling operation of an asset in an industrial environment, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

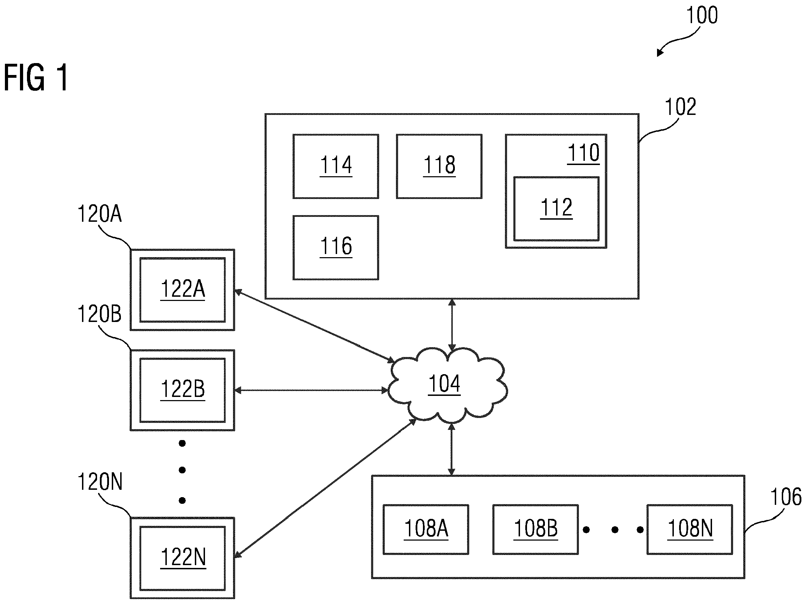

FIG 1 is a block diagram of an industrial environment 100 in accordance with an embodiment of the present invention. The industrial environment 100 includes at least one industrial plant 106 comprising at least one asset 108. The industrial environment 100 further includes an industrial control system 102, the industrial plant 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the industrial plant 106 via a network 104 (such as Local Area Network (LAN), Wide Area Network (WAN), Wi-Fi, Internet, any short range or wide range communication). The industrial control system 102 is also connected to the one or more client devices 120A-N via the network 104.

The at least one asset is any equipment whose operation may be controlled using the industrial control system. The industrial control system 102 controls the operation of the asset by modifying one or more adjustable variables associated with the asset. Herein, value of the one or more adjustable variables indicate an operating point of the asset. Non-limiting examples of the at least one asset include heaters, chillers, boilers, motors, building cooling systems, refrigeration systems, and Heating Ventilation & Air Condition (HVAC) systems.

Although FIG 1 illustrates the industrial control system 102 connected to one industrial plant 106, a person skilled in the art can envision that the industrial control system 102 can be connected to several industrial plants located at different geographical locations via the network 104.

The industrial control system 102 may be a standalone server deployed at a control station or may be a remote server on a cloud computing platform or an edge computing-based platform. In a preferred embodiment, the industrial control system 102 may be a cloud-based industrial control system or an edge platform based industrial control system. The industrial control system 102 is configured to deliver applications (such as cloud applications) for controlling the at least one asset 108. The industrial control system 102 may comprise a performance management platform 110 (such as a cloud computing platform or an EDGE computing platform), a control module 112, a server 114 including hardware resources and an operating system (OS), a network interface 116 and a database 118. The network interface 116 enables communication between the industrial control system 102, the industrial plant 106, the one or more client devices 120A-N, and the at least one asset 108. In one example, the control module 112 is implemented as an edge application in one or more edge devices in the industrial environment 100.

The one or more client devices 120A-N may be a desktop computer, laptop computer, tablet, smart phone and the like. Each of the one or more client devices 120A-N is provided with a user interface 122A-N for providing inputs to the industrial control system 102. The one or more client devices 120A-N can access the industrial control system 102 for controlling the at least one asset. The one or more client devices 120A-N can access cloud applications. Throughout the specification, the terms `human machine interface', `client device' and `user device' are used interchangeably. The one or more client devices 120A-N are further configured to receive a plurality of user actions from a plurality of users. The plurality of user actions comprises user inputs, user commands, user gestures, programming instructions, and user passwords.

In one example, the one or more client devices 120A-N comprises a plurality of edge devices which form an edge computing platform in which the control module 112 is implemented. The control module 112 is implemented as an edge application runs in the edge computing platform.

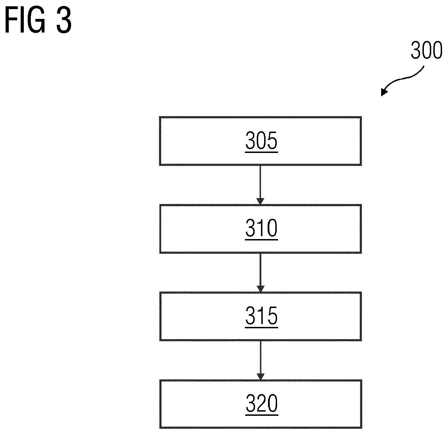

The server 114 may include one or more servers on which the OS is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. In one example, the performance management platform 110 may be implemented in the server 114. The performance management platform 110 enables functionalities such as data reception, data processing, data rendering, data communication, etc. using the hardware resources and the OS of the server 114 and delivers the aforementioned services using the application programming interfaces deployed therein. The performance management platform 110 may comprise a combination of dedicated hardware and software built on top of the hardware and the OS. In an exemplary embodiment, the performance management platform 110 may correspond to an Integrated Development Environment (IDE) comprising program editors and compilers which allow the users of the one or more client devices 120A-N to manage operation of one or more assets 108A-N in the industrial plant 106. The performance management platform 110 may further comprise the control module 112 configured for controlling operation of one or more assets. Details of the control module 112 is explained in FIG. 3.

The database 118 stores the information relating to the industrial plant 106, the at least one asset 108, the one or more client devices 120A-N and log files corresponding to operation of the asset 108, physics-based models and data-drive models required for control of the asset 108. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the performance management platform 110. The database 118, according to another embodiment of the present invention, is a location on a file system directly accessible by the control module 112.

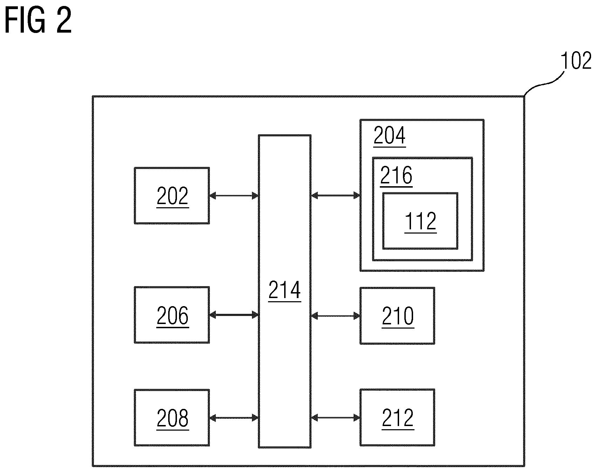

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, a neural processing unit (NPU) or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the control module 112 stored in the form of machine-readable instructions on any of the above-mentioned storage media and may be in communication with and executed by the processor(s) 202.

Those of ordinary skilled in the art will appreciate that the hardware depicted in FIGS 1 and 2 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

FIG 3 shows a flowchart of a method 300 for training a data-driven model using synthesized data, in accordance with an embodiment of the present invention. The method comprises steps 305 to 320.

At step 305, behavior of an asset corresponding to a plurality of loading conditions for predetermined sets of adjustable variable values, using a physics-based model of the asset. In an embodiment, the physics-based model comprises a system model of the asset. The term 'loading condition' as used herein refers to one or more loading parameters that impact an operational efficiency of the asset. In an embodiment of the present invention, the asset is a chiller system for maintaining a specific room temperature in a datacenter server room, and the physics-based model includes one or more thermodynamic equations associated with the chiller system. The room temperature is influenced by loading parameters including, but not limited to, ambient temperature, humidity, airflow and heat generated by hardware in the datacenter. Therefore, the loading condition of the asset may be influenced by one or more of such loading parameters at a given point of time. Further, the room temperature may be controlled by varying one or more of adjustable variables associated with the chiller system. Non-limiting examples of the adjustable variables include compressor speed, expansion valve opening, and pump speed.

The behavior of the chiller system is simulated by solving the one or more thermodynamic equations in the physics-based model of the asset using a 0D or 1D approach, for a plurality of loading conditions (heat load scenarios). In the present example, value of one or more loading parameters such as, but not limited to, ambient temperature, humidity, airflow, and heat load generated by hardware in the datacenter, are modified in the physics-based model to emulate the plurality of loading conditions. Further, the adjustable variables such as compressor speed, expansion valve opening, and pump speed are modified to emulate a control strategy for the given loading condition. Upon modifying the adjustable variables, at least one of the loading parameters associated with the physics-based model is sampled for each loading condition and set of adjustable variable values. In other words, changes in the at least one loading parameter is monitored to determine which set of adjustable variable values are most suitable for a specific loading condition. For example, temperature may be monitored in order to determine if the set of adjustable variable values is making a desirable effect on the temperature loading parameter, e.g., for bringing the temperature within a desired range. In particular, a specific loading condition may have multiple simulation instances with varying sets of adjustable variable values. In the present example, the adjustable variable values corresponding to compressor speed, expansion valve opening, pump speed are identified corresponding to each loading condition.

At step 310, an optimal set of adjustable variable values corresponding to each loading condition is determined from the simulated behaviour of the asset. In the present example, room temperature values are determined from each of the simulation instances. In an embodiment, the optimal set of adjustable variable values (e.g., brings closest to a predefined set point) corresponding to each loading condition is identified. The optimal set of adjustable variable values is a set of adjustable variable values that result in optimization of at least one of the loading parameters.

At step 315, a synthesized dataset is generated based on each of the loading conditions and the corresponding optimal set of adjustable variable values. In an embodiment, the synthesized dataset is generated purely based on the simulated behavior of the asset for the plurality of loading conditions. In another embodiment, the synthesized dataset is generated based on a combination of the simulated behavior of the asset and inputs from a secondary source such as a database. For example, the inputs from the secondary source may include set of adjustable variable values to be implemented for a specific loading condition, as predefined by a user.

At step 320, the synthesized dataset is used to train a data-driven model using a machine learning technique. The data-driven model is a trainable mathematical model. In an embodiment, the data-driven model is a neural network model. Non-limiting examples of neural network models include perceptron, feed forward neural network, multilayer perceptron, radial basis functional neural network, recurrent neural network or a combination thereof. Non-limiting examples of the machine learning technique include supervised learning techniques, unsupervised learning techniques and reinforcement learning. In an embodiment, the synthesized dataset is a labelled dataset that is usable for training the data-driven model using a supervised learning algorithm.

In an embodiment, the supervised learning techniques uses at least a regression algorithm for training the data-driven model. Non-limiting examples of regression algorithms include linear regression, non-linear regression, regression trees, Bayesian Linear regression, and polynomial regression. The regression algorithm trains the data-driven model to predict one or more of the adjustable variables that are continuous in nature. For example, coolant flow rate may take continuous values say from 0-3m/s. In another embodiment, the supervised learning techniques uses at least a classification algorithm for training the data-driven model. Non-limiting examples of classification algorithms include K-nearest Neighbors, Naive Bayes, Decision Tree, and Support Vector Machines. The classification algorithm trains the data-driven model to predict one or more adjustable variables that are categorical in nature. For example, the adjustable variable may be associated with switching 'ON' or 'OFF' of the compressor pump or deciding the suitable compressor pump speed.

In an example, the labels in the labelled dataset may include 'Temperature' 'Coolant_flowrate', 'airflow', 'humidity' and 'control action'. The label `control action' indicates a set of adjustable variable values employed corresponding to specific values of the loading parameters 'Coolant_flowrate' 'airflow', 'humidity', and/or 'Temperature'. Each of the loading parameters may take numerical values. For example, the data labelled 'Temperature' may take different values, e.g., 25, 25.5, 28 etc., the data labelled `coolant flow-rate' may take values 3, 3.2,3.1, etc. The data labelled 'control action' may include adjustable variables in the form of categorical variables such as 'P', 'PI', 'PID', `on-off , `fuzzy', or continuous variables such as `pump speed' that take continuous values. Additionally, categorical variables may also have associated adjustable variables such as proportional gain, integral gain, derivative gain, upper limit value, lower limit value or output initial value that are specific to the value of the categorical variable. Each datapoint in the training dataset may include a combination of a value of each of the adjustable variables, loading parameters etc. along with the corresponding labels. The loading parameters form the input to the data-driven model, while the adjustable variables form the output from the data-driven model. The trained data-driven model is deployed onto the industrial control system 102 for controlling the asset. The data-driven model is deployed onto the industrial control system 102 via the network 104. In an example, the data-driven model is deployed to the industrial control system 102 in response to an update request from the industrial control system 102. Upon receiving the update request, the latest version of the data-driven model is deployed.

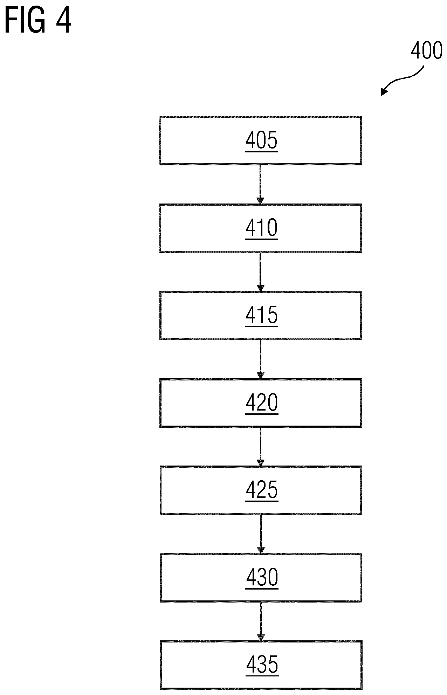

FIG 4 shows a flowchart of a method 400 for controlling operation of an asset in an industrial environment, in accordance with an embodiment of the present invention. The method 400 is implementable on the industrial control system 102.

At step 410, a first set of adjustable variable values is estimated, by the processor, using a data-driven model based on a real-time loading condition associated with the asset during operation. The term `set of adjustable variable values' as used herein refers to values of one or more adjustable variables to be applied for controlling an operation of the asset. In an embodiment, loading condition of the asset is estimated based on measurement of at least one loading parameter associated with the asset. The term 'loading parameter' as used herein, refers to a process variable associated with the asset that is being controlled. In an embodiment, the at least one loading parameter is measured using a sensing unit. For example, in case of chiller systems, loading parameters include temperature, humidity and airflow in the datacenter server room wherein the chiller system is installed. The temperature is measured using temperature sensors such as thermocouples, resistance temperature detectors (RTD), thermistors, and semiconductor-based integrated circuits installed on racks of the datacenter hardware. Similarly, the humidity is measured using relative humidity sensors, and airflow is measured using airflow sensors located within the datacenter server room. In another embodiment, the loading parameter is measured using a sensorless technique. For example, correlation models may be used to compute the loading parameter based on one or more other loading parameters that are measured using sensing units. Advantageously, the present invention eliminates the need for measuring all loading parameters associated with the operation of the asset.

The data-driven model is trained based on synthesized dataset indicative of behavior of the asset for a plurality of loading conditions, as explained with reference to method 300 earlier. In an embodiment, the input to the data-driven model is generated by converting the measured value of the at least one loading parameter into a vector representation using an embedding technique. In case the loading condition is indicated by a plurality of loading parameters, the values of the loading parameters may be combined, for example, using concatenation techniques prior to generating the vector representation. The vector representation is further provided as input to the data-driven model. In response, the data-driven model generates updated values for one or more adjustable variables associated with the asset. In the present example, the adjustable variables are, for example, coolant flowrate and cooling air temperature.

At step 415, the first set of adjustable variable values are implemented for controlling an operation of the asset in real-time. In an embodiment, implementing the first set of adjustable variable values include dynamically updating the one or more adjustable variables associated with the asset based on the first set of adjustable variable values. For example, the adjustable variable 'coolant_flowrate' is updated to the value generated by the data-driven model. At step 420, the at least one loading parameter, for example room temperature, associated with the asset is measured, upon implementation of the first set of adjustable variable values. The at least one loading parameter is measured using the sensing unit or using a sensorless technique, as explained earlier in step 405.

At step 425, it is identified whether the at least one loading parameter measured, meets a criterion indicative of an off-design performance of the asset. The term 'off-design performance' as used herein refers to a condition in which one or more loading parameters associated with the asset falling outside a predefined range or failing to meet a predefined value. In an embodiment, the off-design performance is identified based on design specifications of the asset The design specifications may be, for example, specified in an operator's manual associated with the asset. In another embodiment, the off-design performance is detected based on deviation from predefined range or value of the at least one loading parameter, as defined by a user or original equipment manufacturer. In an implementation, the at least one loading parameter is compared against the predefined range or value using a digital logic circuit, in order to detect off-design performance. In the present example, the criterion may be that the room temperature in fails to meet a set point of 16°C.

At step 430, a second set of adjustable variable values are estimated based on the at least one loading parameter measured using a physics-based model of the asset, upon identifying that the at least one loading parameter meets the criterion. In an embodiment, determining the second set of adjustable variable values, includes providing the measured value of the at least one loading parameter of the asset as input to the physics-based model. The physics-based model is based on a predefined relationship between a loading condition of the asset and a set of adjustable variable values that are optimal for the loading condition. Further, the second set of adjustable variable values are determined from the output of the physics-based model. If the at least one loading parameter fails to meet the criterion, i.e., if the asset is in on-design performance, the adjustable variable values computed by the data-driven model based on the real-time loading condition of the asset continues to be implemented.

At step 435, the second set of adjustable variable values are implemented for controlling the operation of the asset in real-time. In an embodiment, the second set of adjustable variable values is implemented by dynamically updating the one or more adjustable variables associated with the asset based on the second set of adjustable variable values. In the present example, the coolant flowrate is updated to the value generated by the physics-based model.

In a further embodiment, the data-driven model is updated based on the second set of adjustable variable values and loading parameters of the asset upon implementing the second set of adjustable variable values. In particular, if the loading parameters of the asset upon implementing the second set of adjustable variable values indicate an on-design performance of the asset, then the data-driven model is updated based on the second set of adjustable variable values and loading parameters that defined the real-time loading condition in step 405. Consequently, when a similar loading condition arises in future, the data-driven model is capable of implementing the second set of adjustable variable values, to bring the asset back into on-design performance. Herein, the term 'on-design performance' refers to a condition in which one or more loading parameters associated with the asset fall within a predefined range or meet a predefined value deemed suitable by a user or original equipment manufacturer of the asset. In an example, updating of the data-driven model includes updating the synthesized dataset used for training of the data-driven model initially to include datapoints corresponding to handling of off-design performance situations encountered during operation of the asset. The updated data-driven model is further deployed onto the industrial control system 102 for dynamic controlling of the asset.

Advantageously, the present invention uses the data-driven model as the main mode of control, while the physics-based model is a backup mechanism to rectify conditions in which the data-driven model fails to perform in a desirable way. The use of data-driven models helps in minimizing computational resource utilization and computation delays, as compared to use of physics-based models. Further, data-driven models may act as reduced order models that require a smaller number of inputs as compared to traditional physics-based models. The data-driven model may be trained to mimic human actions by allowing generation of the synthesized dataset based on adjustable variable values assigned by an engineer while simulating behaviour of the asset in different loading conditions. Further, measuring of the loading parameter after implementation of the first set of adjustable variable values, helps in verifying whether the first set of adjustable variable values helps in controlling the operation of the asset in a desired way, and invoking the physics-based model if an off-design performance is observed. Consequently, the present invention enables management of off-design performance of the asset, without the need for manual intervention, by automatically switching over from the data-based model to the physics-based model for computation of the adjustable variables.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

### List of Reference

- 100: industrial environment
- 102: industrial control system
- 104: network
- 106: industrial plant
- 108: asset
- 112: control module
- 114: server
- 116: network interface
- 118: database
- 120A-N: client devices
- 122A-N: user interfaces
- 202: processing unit
- 204: accessible memory
- 206: storage unit
- 208: communication interface
- 210: input-output unit
- 212: network interface
- 214: bus
- 216: integrated development environment

## Claims

1. A method for dynamically controlling operation of an asset (108) in an industrial environment, the method comprising:
estimating, by a processing unit, a first set of adjustable variable values using a data-driven model based on a real-time loading condition associated with the asset (108) during operation, the data-driven model being trained based on synthesized dataset indicative of behavior of the asset (108) for a plurality of loading conditions;
implementing, by the processing unit, the first set of adjustable variable values for controlling an operation of the asset (108) in real-time;
measuring, by the processing unit, at least one loading parameter associated with the asset (108), upon implementation of the first set of adjustable variable values;
identifying, by the processing unit, whether the at least one loading parameter measured, meets a criterion indicative of an off-design performance of the asset (108);
estimating, by the processing unit, a second set of adjustable variable values based on the at least one loading parameter measured, using a physics-based model of the asset (108), upon identifying that the at least one loading parameter meets the criterion; and
implementing, by the processing unit, the second set of adjustable variable values for controlling the operation of the asset (108) in real-time.

2. The method according to claim 1, wherein the synthesized dataset is generated by simulating behavior of the asset (108) for the plurality of loading conditions, using a physics-based model.

3. The method according to claims 1 and 2, wherein the physics-based model is based on a predefined relationship between a loading condition of the asset (108) and a set of adjustable variable values that are optimal for the loading condition.

4. The method according to claim 2 or 3, wherein training the data-driven model based on the synthesized dataset comprises:
simulating behavior of the asset (108) corresponding to a plurality of loading conditions for predetermined sets of adjustable variable values, using the physics-based model of the asset (108);
determining an optimal set of adjustable variable values corresponding to each of the loading conditions based on the simulated behaviour of the asset (108);
generating a synthesized dataset based on each of the loading conditions and the corresponding optimal set of adjustable variable values; and
using a machine learning technique to train the data-driven model based on the synthesized data.

5. The method according to any of the preceding claims, wherein implementing the first set of adjustable variable values for controlling the operation of the asset (108) in real-time comprises:
dynamically updating the one or more adjustable variables associated with the asset (108) based on the first set of adjustable variable values.

6. The method according to any of the preceding claims, wherein the at least one loading parameter is measured using a sensing unit.

7. The method according to any of the preceding claims, wherein the at least one loading parameter is measured using a sensorless technique.

8. The method according to any of the preceding claims, wherein estimating the second set of adjustable variable values using the physics-based model of the asset (108), comprises:
providing the measured value of the at least one loading parameter associated with the asset (108) as input to the physics-based model; and
determining the second set of adjustable variable values based on an output of the physics-based model.

9. The method according to any of the preceding claims, wherein implementing the second set of adjustable variable values for controlling the operation of the asset (108) comprises:
dynamically updating the one or more adjustable variables associated with the asset (108) based on the second set of adjustable variable values.

10. The method according to any of the preceding claims, further comprising:
updating the data-driven model based on the second set of adjustable variable values and loading parameters of the asset (108) upon implementing the second set of adjustable variable values.

11. An industrial control system (102) for dynamically controlling operation of an asset (108), wherein the industrial control system (102) comprises:
a processing unit (202); and
a memory (204) coupled to the processing unit (202), wherein the memory comprises a control module (112) stored in the form of machine-readable instructions executable by the one or more processor(s), wherein the control module (112) is capable of performing a method according to any of the claims 1 to 10.

12. The industrial control system (102) according to claim 11, wherein the asset (108) is a chiller system installed in a datacenter server room.

13. An industrial environment (100) comprising:
an industrial control system (102) as claimed in claim 11;
an industrial plant (106) comprising one or more assets (108); and
a one or more client devices (120A-N) communicatively coupled to the industrial control system (102) via a network (104), wherein the industrial control system (102) is configured to perform a method according to any of the claims 1 to 10.

14. A computer-program product, having machine-readable instructions stored therein, that when executed by a processing unit (202), cause the processing unit to perform a method according to any of the claims 1 to 10.
